# EUROPÄISCHE PATENTSCHRIFT

(11) **EP 2 557 386 B1**
(45) Veröffentlichungstag und Bekanntmachung des Hinweises auf die Patenterteilung: **24.01.2018**
(21) Anmeldenummer: 12169738.7
(22) Anmeldetag: 29.05.2012
(51) Int. Cl.: F28D 20/02, F28F 3/04, F01N 3/28, B01D 53/94, F28D 20/00

(54) **Latentwärmespeicher und Katalysator**
Latent heat storage device and catalyst
Accumulateur thermique latent et catalyseur

(30) Priorität: 10.08.2011 DE 102011080782
(43) Veröffentlichungstag der Anmeldung: 13.02.2013
(73) Patentinhaber: Eberspächer Exhaust Technology GmbH & Co. KG, 66539 Neunkirchen (DE)
(72) Erfinder: Gaiser, Gerd, 72768 Reutlingen (DE)
(74) Vertreter: BRP Renaud & Partner mbB Rechtsanwälte Patentanwälte Steuerberater

(56) Entgegenhaltungen:
- EP-A1- 2 177 255
- EP-A1- 2 282 154
- WO-A2-2010/139772
- WO-A2-2011/094371
- US-A1- 2006 196 632
- US-A1- 2007 056 712
- US-B1- 6 207 116

## Beschreibung

Die vorliegende Erfindung betrifft einen Latentwärmespeicher für eine Abgasanlage einer Brennkraftmaschine, insbesondere eines Kraftfahrzeugs, mit den Merkmalen des Oberbegriffs des Anspruchs 1. Die vorliegende Erfindung betrifft außerdem einen mit einem derartigen Latentwärmespeicher ausgestatteten Katalysator.

Aus der DE 10 2009 034 655 A1 ist ein Latentwärmespeicher bekannt, bei dem eine Vielzahl von Plattenkörpern aneinander anliegen, die jeweils eine Wellenstruktur aufweisen. Zueinander benachbarte Plattenkörper sind dabei so zueinander ausgerichtet, dass ihre Wellenstrukturen parallel zueinander verlaufen. Hierdurch können sich die Wellen der Wellenstruktur des einen Plattenkörpers im Bereich von Wellentälern linienförmig im Bereich von Wellenbergen der Wellen der Wellenstruktur des anderen Plattenkörpers berühren. Entlang dieser linienförmigen Kontaktstellen lassen sich die Plattenkörper dicht aneinander befestigen, bspw. mittels Schweißnähten. Hierdurch lassen sich zwischen zwei benachbarten Plattenkörpern mehrere nebeneinander angeordnete kanalförmige Speicherräume ausbilden, die jeweils mit Wärmespeichermaterial befüllbar sind.

Als Wärmespeichermaterial wird bei einem Latentwärmespeicher zweckmäßig ein Phasenwechselmaterial verwendet, um im Bereich der Phasenwechseltemperatur vergleichsweise viel Wärme latent speichern zu können. Beim Phasenwechsel kommt es üblicherweise zu einer Volumenänderung im Wärmespeichermaterial. Beim Aufschmelzen des Wärmespeichermaterials dehnt sich dieses üblicherweise aus. Hierbei besteht die Gefahr von Beschädigungen des Latentwärmespeichers. Bspw. ist darauf zu achten, dass die Wärmezufuhr beim Aufschmelzen des Wärmespeichermaterials nicht so erfolgt, dass zuerst ein Bereich des Wärmespeichermaterials aufschmilzt, der durch das später aufschmelzende, noch feste Wärmespeichermaterial eingeschlossen bzw. in seiner Ausdehnung blockiert ist. Je nach Konfiguration des Latentwärmespeichers muss daher die jeweilige Einbausituation berücksichtigt werden.

Aus der DE 10 2009 034 654 A1 ist es grundsätzlich bekannt, innerhalb des Latentwärmespeichers für das Wärmspeichermaterial zusätzliches Speichervolumen bereitzustellen, sodass für die Ausdehnung des Wärmespeichermaterials ausreichend Volumen zur Verfügung steht. Die US 2006/0196632 beschreibt einen Latentwärmespeicher, mit wenigstens einer Speicherplatte, die zwei aufeinanderliegende, einen mit Wärmespeichermaterial befüllten Speicherraum einschließende, jeweils eine Wellenstruktur aufweisende Plattenkörper aufweist, wobei die Wellenstruktur des einen Plattenkörpers gegenüber der Wellenstruktur des anderen Plattenkörpers geneigt verläuft, wobei zumindest zwei Speicherplatten vorgesehen sind, die zur Ausbildung eines Plattenstapels aufeinander angeordnet sind, wobei zwischen benachbarten Speicherplatten ein Strömungspfad ausgebildet ist, wobei der jeweilige Strömungspfad seitlich durch Seitenwände begrenzt ist, die sich entlang des Plattenstapels erstrecken.

Die vorliegende Erfindung beschäftigt sich mit dem Problem, für einen Latentwärmespeicher der eingangs genannten Art bzw. für einen damit ausgestatteten Katalysator eine verbesserte Ausführungsform anzugeben, die sich insbesondere dadurch auszeichnet, dass die Gefahr thermisch bedingter Spannungen reduziert ist. Des Weiteren ist eine hohe Wärmeübertragungsrate angestrebt, um Wärme aufnehmen bzw. abgeben zu können.

Bei der vorliegenden Erfindung wird dieses Problem insbesondere durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, den Latentwärmespeicher mit wenigstens einer Speicherplatte auszustatten, wobei die jeweilige Speicherplatte jeweils nur zwei aufeinander liegende, einen einzigen, mit Wärmespeichermaterial befüllten Speicherraum einschließende, jeweils eine Wellenstruktur aufweisende Plattenkörper umfasst. Innerhalb der jeweiligen Speicherplatte sind die Plattenkörper so zueinander ausgerichtet, dass die Wellenstruktur des einen Plattenkörpers gegenüber der Wellenstruktur des anderen Wellenkörpers geneigt verläuft. Hierdurch ergeben sich an den aneinander zugewandten Seiten der beiden Plattenkörper der jeweiligen Speicherplatte entlang der Wellenstrukturen im Wesentlichen nur punktförmige Berührungen, wodurch ein einziger, gemeinsamer und zusammenhängender Speicherraum zwischen den beiden Plattenkörpern der jeweiligen Speicherplatte entsteht. Da sich die beiden Plattenkörper hinsichtlich ihrer Wellenstruktur im Raum unterschiedlich erstrecken, ergeben sich verbesserte Möglichkeiten für den Einbau der Speicherplatten und somit für den Einbau des damit ausgestatteten Latentwärmespeichers. Insbesondere können sich die Plattenkörper der jeweiligen Speicherplatte aufgrund der unterschiedlich geneigten Wellenstrukturen quasi in allen Raumrichtungen elastisch ausdehnen, ohne dass es dabei zu übermäßigen strukturellen Spannungen innerhalb der Speicherplatte kommt. Innerhalb des Latentwärmespeichers sind zumindest zwei Speicherplatten vorgesehen, die zur Ausbildung eines Plattenstapels aufeinander angeordnet sind, wobei zwischen benachbarten Speicherplatten ein Strömungspfad ausgebildet ist. Durch den Strömungspfad ist es möglich, über eine durch den Strömungspfad geleitete Fluidströmung, insbesondere Gasströmung, vorzugsweise Abgasströmung, Wärme dem Latentwärmespeicher zuzuführen oder vom Latentwärmespeicher abzuführen bzw. aufzunehmen.

Der jeweilige Strömungspfad ist seitlich durch Seitenwände begrenzt, die sich von einem offenen Einlass des Strömungspfads bis zu einem offenen Auslass des Strömungspfads entlang des Plattenstapels erstrecken. Hierdurch wird die Hauptdurchströmungsrichtung des Strömungspfads definiert. Sofern mehr als zwei solcher Platten innerhalb des Plattenstapels vorhanden sind, werden durch die seitlichen Wände die Hauptdurchströmungsrichtungen der Strömungspfade parallel zueinander ausgerichtet. Ferner sind die einzelnen Strömungspfade durch den gemeinsamen Einlass und den gemeinsamen Auslass parallel geschaltet.

Einlass und Auslass liegen sich in einer Längsachse gegenüber. Die Seitenwände erstrecken sich parallel zur Längsachse und liegen sich quer zur Längsachse gegenüber.

Die Seitenwände sind durch abgewinkelte und einander überlappende Seitenränder der Speicherplatten gebildet. Diese Seitenränder können dabei linienförmige, vorzugsweise flächige Kontaktzonen bilden, in denen sich die Seitenränder zur Ausbildung der Seitenwände berühren und in denen die Seitenränder aneinander befestigt sein können. Geeignete Befestigungen können bspw. durch Verlöten oder Verschweißen realisiert werden.

Zweckmäßig kann die jeweilige Wellenstruktur mehrere parallel zueinander verlaufende Wellen aufweisen, die in einer Längsrichtung der Wellenstruktur aufeinanderfolgen und sich in einer senkrecht zur Längsrichtung verlaufenden Querrichtung der Wellenstruktur erstrecken.

Vorteilhaft kann der jeweilige Plattenkörper rechteckig konzipiert sein, wodurch bspw. ein Gehäuse zur Aufnahme eines oder mehrerer Plattenkörper besonders einfach herstellbar ist. Der rechteckige Plattenkörper besitzt eine Längsrichtung und senkrecht dazu eine Querrichtung.

Bei geneigt zueinander verlaufenden Wellenstrukturen bei den beiden Plattenkörpern innerhalb der Speicherplatte kann nun innerhalb des jeweiligen Plattenkörpers die Längsrichtung der zugehörigen Wellenstruktur gegenüber der Längsrichtung des jeweiligen Plattenkörpers geneigt verlaufen. Bspw. können die Längsrichtungen der Wellenstruktur und des Plattenkörpers um etwa 45° zueinander geneigt verlaufen.

Besonders zweckmäßig ist nun eine Konfiguration, in welcher die Längsrichtungen der beiden Plattenkörper innerhalb der jeweiligen Speicherplatte parallel zueinander verlaufen, während die Längsrichtungen der beiden zugehörigen Wellenstrukturen in entgegengesetzten Richtungen zu den Längsrichtungen der Plattenkörper geneigt verlaufen. Bevorzugt ist hierbei eine symmetrische Anordnung. Bspw. kann die Längsrichtung der einen Wellenstruktur gegenüber den Längsrichtungen der beiden Plattenkörper um +45° geneigt sein, während die Längsrichtung der anderen Wellenstruktur gegenüber den Längsrichtungen der beiden Plattenkörper um -45° geneigt ist. Insgesamt sind dann die Längsrichtungen der beiden Wellenstrukturen um etwa 90° zueinander geneigt.

Die jeweilige Wellenstruktur kann im Querschnitt kreisbogenförmige Wellen oder sinusförmige Wellen oder trapezförmige Wellen oder dreieckförmige Wellen aufweisen.

Als Werkstoff für die Plattenkörper eignen sich vorwiegend Metalle bzw. metallische Legierungen. Zweckmäßig ist der jeweilige Plattenkörper durch einen entsprechend gewählten Blechkörper gebildet.

Als Wärmespeichermaterial kommt auch beim erfindungsgemäßen Latentwärmespeicher bevorzugt ein Phasenwechselmaterial zum Einsatz.

Gemäß einer vorteilhaften Ausführungsform können die Plattenkörper innerhalb des Speicherraums mehrere Kontaktstellen aufweisen, in denen sie aneinander anliegen, wobei die Plattenkörper in mehreren oder in allen Kontaktstellen aneinander befestigt sein können. Bspw. lassen sich an den Kontaktstellen Lötverbindungen oder Schweißverbindungen realisieren. Die Kontaktstellen sind - je nach Querschnittsprofil der Wellen der Wellenstrukturen - vorzugsweise punktförmig. Grundsätzlich sind jedoch auch linienförmige oder flächige Kontaktstellen denkbar. Wesentlich ist jedoch, dass sich die Plattenkörper über eine Vielzahl derartiger singulärer Kontaktstellen berühren und eben nicht über langgestreckte, zusammenhängende, linienförmige Kontaktbereiche, die sich über die gesamte, in der Querrichtung gemessene Breite einer Welle erstrecken. Vielmehr erstrecken sich die Kontaktstellen bei der hier vorgestellten bevorzugten Ausführungsform des erfindungsgemäßen Latentwärmespeichers jeweils nur über einen relativ kleinen Bereich in der Querrichtung der jeweiligen Welle.

Grundsätzlich können die den jeweiligen Strömungspfad seitlich begrenzenden Plattenkörper hinsichtlich ihrer Wellenstrukturen so ausgerichtet sein, dass die Wellenstrukturen parallel zueinander verlaufen, sodass der jeweilige Strömungspfad durch mehrere parallel zueinander verlaufende einzelne Kanäle gebildet ist. Bevorzugt ist jedoch eine Ausführungsform, bei welcher die Wellenstrukturen der den jeweiligen Strömungspfad seitlich begrenzenden Plattenkörper der benachbarten Speicherplatten zueinander geneigt verlaufen. Hierdurch erhält der jeweilige Strömungspfad eine ähnlich zerklüftete Struktur wie der Speicherraum innerhalb der jeweiligen Speicherplatte, was für die jeweilige Fluidströmung einen häufigen Richtungswechsel und somit Turbolenzen und einen intensiven Wärmeübergang bedeutet.

Zweckmäßig können die Längsrichtungen rechteckiger Plattenkörper benachbarter Speicherplatten parallel zueinander verlaufen, während innerhalb des Strömungspfads entgegengesetzt zu den Längsrichtungen der Plattenkörper geneigte Wellenstrukturen vorliegen.

Die parallel zueinander orientierten Längsrichtungen der Plattenkörper definieren dabei eine Längsrichtung des Strömungspfads, die auch als Hauptdurchströmungsrichtung des Strömungspfads bezeichnet werden kann. Mit anderen Worten, die den Strömungspfad seitlich begrenzenden Wellenstrukturen sind in entgegengesetzten Richtungen gegenüber der Längsrichtung des Strömungspfads geneigt, wodurch für die Fluidströmung eine Mehrfachumlenkung erzwungen wird, was die Wärmeübertragung zwischen Fluidströmung und den Speicherplatten begünstigt.

Die Plattenkörper der benachbarten Speicherplatten können entsprechend einer vorteilhaften Ausführungsform innerhalb des Strömungspfads mehrere Kontaktstellen aufweisen, in denen sie aneinander anliegen, wobei die Plattenkörper in mehreren oder in allen Kontaktstellen aneinander befestigt sind, wodurch benachbarte Speicherplatten innerhalb des Plattenstapels aneinander befestigt sind.

Bei einer besonders vorteilhaften Ausführungsform kann zumindest einer der Plattenkörper an einer vom Speicherraum abgewandten Oberfläche eine katalytisch aktive Beschichtung aufweisen. Sofern mehrere Plattenkörper zur Ausbildung eines Plattenstapels vorgesehen sind, kann zumindest eine den Strömungspfad begrenzende Oberfläche mit einer derartigen katalytisch aktiven Beschichtung ausgestattet sein. Hierdurch ist es möglich, in den Latentwärmespeicher die Funktionalität eines Katalysators zu integrieren. Insbesondere vereinfacht sich dadurch der Aufbau eines Katalysators mit darin integriertem Latentwärmespeicher.

Gemäß einer besonders vorteilhaften Ausführungsform kann im Speicherraum der jeweiligen Speicherplatte eine Kapillarstruktur, vorzugsweise in Form eines separaten, zusätzlichen Bauteils, angeordnet sein, die sich entlang mehrerer oder aller Wellen der Wellenstrukturen der beiden Plattenkörper erstreckt. Eine derartige Kapillarstruktur bewirkt in der Flüssigphase des Wärmespeichermaterials, das in diesem Fall als Phasenwechselmaterial konzipiert ist, eine möglichst gleichmäßige Verteilung des flüssigen Wärmespeichermaterials im gesamten Speicherraum. Kommt es dann aufgrund einer Abkühlung zu einer Erstarrung, also zu einem Phasenwechsel, erstarrt das Wärmespeichermaterial weitgehend gleichmäßig verteilt innerhalb des Speicherraums. Hierdurch steht im Wesentlichen überall innerhalb des Speicherraums nach dem Erstarren des Wärmespeichermaterials ausreichend Dehnvolumen zur Verfügung, das bei einer späteren erneuten Verflüssigung des Wärmespeichermaterials das sich ausdehnende Wärmespeichermaterial aufnehmen kann, ohne dass sich dabei unerwünschte Spannungen innerhalb der Struktur der Speicherplatte ausbilden.

Derartige Kapillarstrukturen können bspw. mit Hilfe von Fasermatten oder Vliesmatten realisiert werden. Ebenso sind Netzstrukturen und Schaumkörper aus Keramik oder aus Metallen denkbar.

Nach einer anderen vorteilhaften Ausführungsform kann die jeweilige Speicherplatte einen geschlossen umlaufenden Rand aufweisen, in dem die Plattenkörper flächig aneinander anliegen und aneinander befestigt sind. Bspw. eignen sich hier ebenfalls Lötverfahren und Schweißverfahren. Durch diese Bauweise lassen sich die einzelnen Speicherplatten mit nach außen abgedichtetem Speicherraum besonders einfach herstellen.

Zweckmäßig sind die Speicherplatten im Wesentlichen eben konfiguriert. Besonders vorteilhaft ist eine Bauform, bei welcher der zuvor genannte Rand in einer Kontaktebene liegt, was den Zusammenbau der Speicherplatten vereinfacht. Bzgl. dieser Kontaktebene können die Wellenstrukturen der beiden Plattenkörper in entgegengesetzten Richtungen abstehen. Bspw. befindet sich die Wellenstruktur des einen Plattenkörpers ausschließlich auf der einen Seite der Kontaktebene, während sich die Wellenstruktur des anderen Plattenkörpers ausschließlich auf der anderen Seite der Plattenebene befindet. Dabei ist klar, dass sich die Wellenstrukturen in der Plattenebene berühren können, um die bereits genannten Kontaktstellen innerhalb des Speicherraums zu bilden.

Die Wellenenden, also die Querenden der einzelnen Wellen können im Rand bzw. zum Rand hin auslaufend geformt sein. Die Herstellung der Plattenkörper kann bspw. durch Zuschneiden aus einem quasi endlos bereitgestellten gewellten Bahnenmaterial erfolgen. Ggf. sind dann nur noch die umlaufenden Randbereiche mittels Umformung herzustellen. Anderenfalls ist es ebenso möglich, die Plattenkörper aus einem quasi endlos bereitgestellten, ebenen Bahnenmaterial zu ebenen Platten zu schneiden, in welche die jeweilige Wellenstruktur dann mittels Umformtechnik eingebracht wird, bspw. durch Tiefziehen.

Die jeweilige Speicherplatte kann zumindest eine Befüllungsöffnung aufweisen, um nach dem Fügen der Plattenkörper das Wärmespeichermaterial in den Speicherraum einbringen zu können. Das als Phasenwechselmaterial ausgestaltete Wärmespeichermaterial kann dabei in einem Festzustand, bspw. als schüttfähiges Granulat oder Pulver, oder im Flüssigzustand in den Speicherraum eingefüllt werden. Bspw. kann die jeweilige Speicherplatte eine unten liegende Einfüllöffnung für flüssiges Wärmespeichermaterial und eine oben liegende Entlüftungsöffnung aufweisen. Die jeweilige Befüllungsöffnung kann nach dem Einbringen des Wärmespeichermaterials dauerhaft gasdicht verschlossen werden.

Besonders vorteilhaft ist eine Ausführungsform, bei welcher die zum Herstellen der jeweiligen Speicherplatte verwendeten Plattenkörper als Gleichteile konzipiert sind, die separat herstellbar sind und zur jeweiligen Speicherplatte miteinander verbunden werden.

Alternativ ist es ebenso möglich, die beiden Plattenkörper der jeweiligen Speicherplatte in Form einer einzigen, zusammenhängenden, einstückigen Platte bereitzustellen, die zum Herstellen der Speicherplatte um 180° gefaltet wird. Ein Falz erstreckt sich dann entlang eines Rands der Speicherplatte.

Besonders vorteilhaft kann dann eine Ausführungsform sein, bei welcher zumindest zwei Speicherplatten durch ein durchgehendes, also zusammenhängendes, gefaltetes, einstückiges Bahnenmaterial gebildet sind.

Ein erfindungsgemäßer Katalysator, der sich für eine Abgasanlage einer Brennkraftmaschine, insbesondere eines Kraftfahrzeugs, eignet, ist mit einem Gehäuse ausgestattet, das einen Abgaseinlass und einen Abgasauslass aufweist. Ferner ist im Gehäuse ein Latentwärmespeicher der vorstehend beschriebenen Art angeordnet. Dabei ist es grundsätzlich möglich, im Gehäuse zusätzlich zum Latentwärmespeicher wenigstens ein Katalysatorelement anzuordnen. Zusätzlich oder alternativ ist es möglich, die gewünschte Katalysatorwirkung durch eine entsprechend katalytisch aktive Beschichtung des Latentwärmespeichers im Bereich des jeweiligen Strömungspfads zu realisieren. Hierdurch wird eine besonders kompakte, integrale Bauweise realisiert. Der Latentwärmespeicher kann mit seinen Seitenwänden in das Gehäuse des Katalysators eingesetzt sein, das somit den Latentwärmespeicher einschließlich dessen Seitenwänden umschließt. Alternativ ist es möglich, den Latentwärmespeicher so in das Gehäuse des Katalysators zu integrieren, dass die Seitenwände des Latentwärmespeichers zumindest zum Teil die Seitenwände des Gehäuses bilden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine vereinfachte isometrische Ansicht eines Latentwärmespeichers, mit einer Speicherplatte,
- Fig. 2: eine isometrische Ansicht der Speicherplatte,
- Fig. 3: eine isometrische Ansicht einer Speicherplatte in auseinandergezogener Darstellung,
- Fig. 4: vereinfachte Schnittansichten von Plattenkörpern bei verschiedenen Ausführungsformen a bis d,
- Fig. 5: eine isometrische Ansicht der Speicherplatte in auseinandergezogener Darstellung bei einer Ausführungsform mit Kapillarstruktur,
- Fig. 6: eine isometrische Ansicht einer derartigen Kapillarstruktur,
- Fig. 7: eine vereinfachte Schnittansicht eines Latentwärmespeichers mit einem Plattenstapel,
- Fig. 8: eine Schnittansicht des Latentwärmespeichers mit Plattenstapel wie in Fig. 7, jedoch bei einer anderen Ausführungsform,
- Fig. 9: eine vereinfachte Schnittansicht einer Speicherplatte in einstückiger Bauform,
- Fig. 10: eine vereinfachte Schnittansicht eines Plattenstapels in einteiliger Bauform,
- Fig. 11: eine vereinfachte isometrische Ansicht in auseinandergezogener Darstellung einer Speicherplatte mit Befüllungsöffnung,
- Fig. 12: eine Ansicht wie in Fig. 11, jedoch bei einer anderen Ausführungsform der Befüllungsöffnung,
- Fig. 13: eine isometrische Ansicht der Speicherplatte mit zwei Befüllungsöffnungen,
- Fig. 14: einen vereinfachten Längsschnitt durch einen Katalysator mit eingebautem Latentwärmespeicher,
- Fig. 15: ein vereinfachter Längsschnitt durch einen Katalysator mit integriertem Latentwärmespeicher.

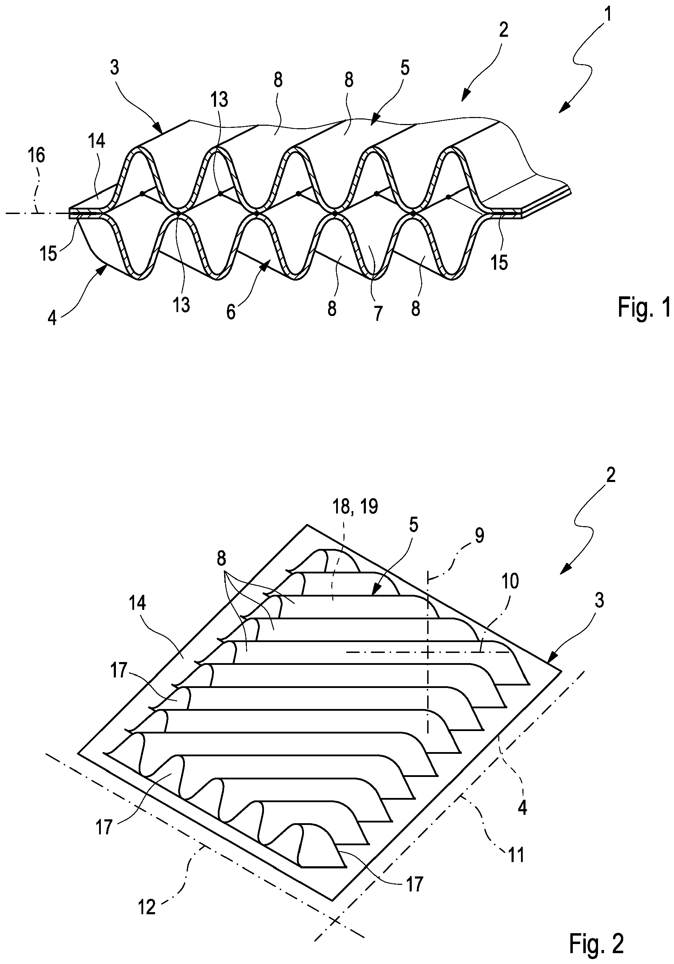

Entsprechend Fig. 1 umfasst ein Latentwärmespeicher 1, der für eine Verwendung in einer Abgasanlage einer Brennkraftmaschine, insbesondere eines Kraftfahrzeugs, vorgesehen ist, zumindest eine Speicherplatte 2. Die Speicherplatte 2 weist zwei Plattenkörper 3,4 auf, die aufeinanderliegen und jeweils eine Wellenstruktur 5,6 aufweisen. Die beiden Plattenkörper 3,4 schließen zwischen sich einen Speicherraum 7 ein. Die Plattenkörper 3,4 sind hinsichtlich ihrer Wellenstrukturen 5,6 so aufeinander abgestimmt, dass die Wellenstruktur 5 des einen Plattenkörpers 3 gegenüber der Wellenstruktur 6 des anderen Plattenkörpers 4 geneigt verläuft. Durch die zueinander geneigt verlaufenden Wellenstrukturen 5,6 erhält der Speicherraum 7 eine zerklüftete Struktur, wodurch ein durchgehender, gemeinsamer Speicherraum 7 zwischen den beiden Plattenkörpern 3,4 entsteht. Insbesondere weist die Speicherplatte 2 somit in ihrem Inneren nur einen einzigen, durchgehenden Speicherraum 7 auf. Die komplexe Struktur des Speicherraums 7 ergibt sich durch die einander zugewandten Wellentäler der Wellenstrukturen 5,6, die jeweils zum anderen Plattenkörper 3,4 hin offene Halbkanäle bilden, die somit zueinander offen sind und entsprechend den Wellenstrukturen 5,6 geneigt zueinander verlaufen.

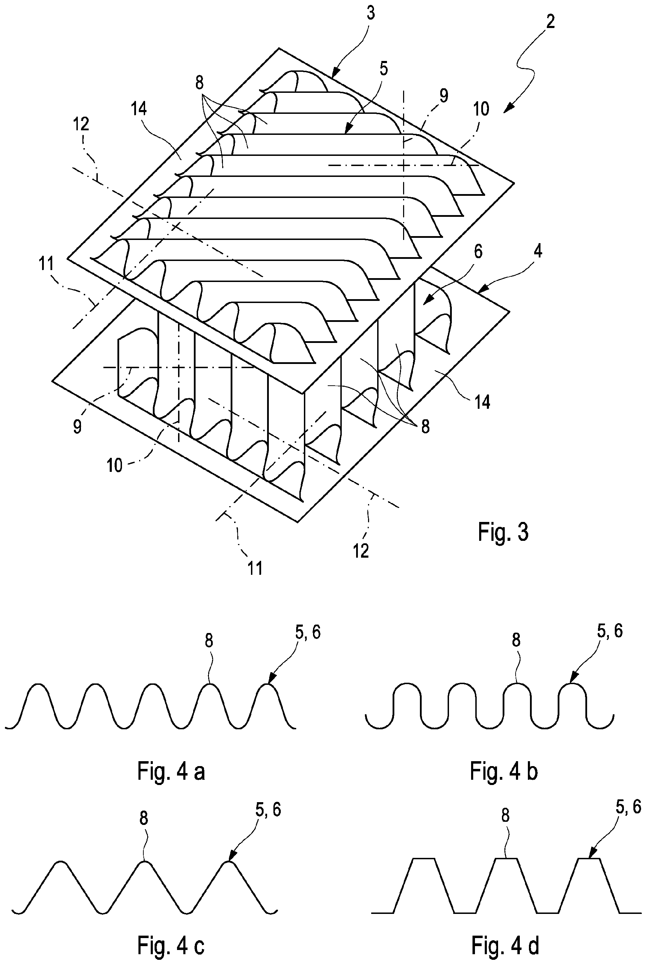

Gemäß den Figuren 2 und 3 weist die jeweilige Wellenstruktur 5,6 mehrere parallel zueinander verlaufende Wellen 8 auf, die in einer Längsrichtung 9 der jeweiligen Wellenstruktur 5,6 aufeinanderfolgen und die sich in einer Querrichtung 10 der jeweiligen Wellenstruktur 5,6 erstrecken. Der jeweilige Plattenkörper 3,4 ist im Beispiel rechteckig konzipiert und besitzt dementsprechend eine Längsrichtung 11 sowie eine Querrichtung 12. Innerhalb der jeweiligen Wellenstruktur 5,6 stehen die zugehörige Längsrichtung 9 und die zugehörige Querrichtung 10 senkrecht aufeinander. Innerhalb des jeweiligen Plattenkörpers 3,4 stehen die zugehörige Längsrichtung 11 und die zugehörige Querrichtung 12 senkrecht aufeinander. Innerhalb des jeweiligen Plattenkörpers 3,4 ist nun die Längsrichtung 9 der Wellenstruktur 5,6 gegenüber der Längsrichtung 11 des jeweiligen Plattenkörpers 3,4 geneigt. Im Beispiel entspricht diese Neigung einem Winkel von etwa 45°. Innerhalb der Speicherplatte 2 verlaufen die Längsrichtungen 11 der beiden Plattenkörper 3,4 parallel zueinander. Im Unterschied dazu sind die Längsrichtungen 9 der beiden Wellenstrukturen 5,6 innerhalb der Speicherplatte 2 in entgegengesetzten Richtungen zu den Längsrichtungen 11 der Plattenkörper 3,4 geneigt. Im gezeigten Beispiel verläuft die Längsrichtung 9 der einen Wellenstruktur 5 gegenüber den beiden Längsrichtungen 11 der Plattenkörper 3,4 um +45° geneigt, während die Längsrichtung 9 der anderen Wellenstruktur 6 gegenüber den Längsrichtungen 11 der beiden Plattenkörper 3,4 um -45° geneigt verläuft.

Gemäß Fig. 1 besitzen die Plattenkörper 3,4 innerhalb des Speicherraums 7 mehrere Kontaktstellen 13, in denen die Plattenkörper 3,4 einander berühren. In mehreren oder in allen derartigen Kontaktstellen 13 können die Plattenkörper 3,4 aneinander befestigt sein. Dementsprechend können die Kontaktstellen 13,14 Lötstellen oder Schweißstellen sein.

Den Figuren 1 bis 3 lässt sich außerdem entnehmen, dass die jeweilige Speicherplatte 2 zweckmäßig einen geschlossen umlaufenden Rand 14 besitzt, in dem die Plattenkörper 3,4 flächig aneinander anliegen und aneinander befestigt sind. In Fig. 1 ist mit 15 eine entsprechende, geschlossen umlaufende Kontaktfläche bezeichnet, die mittels einer Lötverbindung oder einer Schweißverbindung hergestellt sein kann. Die Speicherplatte 2 besitzt bei den hier gezeigten Ausführungsformen jeweils eine ebene Struktur, sodass der zuvor genannte Rand 14 in einer Kontaktebene 16 liegt, in welcher der randseitige Kontakt zwischen den beiden Plattenkörpern 3,4 erfolgt. Ferner ist die Formgebung der Plattenkörper 3,4 bei der hier gezeigten Ausführungsform so gewählt, dass sich die Wellenstrukturen 5,6 der beiden Plattenkörper 3,4 in besagter Kontaktebene 16 berühren, sodass der Kontaktbereich 15 und die Kontaktstellen 13 in besagter Kontaktebene 16 liegen. Die Wellenstruktur 5 des einen Plattenkörpers 3 befindet sich nun abgesehen von den Kontaktstellen 13 an einer vom anderen Plattenkörper 4 abgewandten Seite der Kontaktebene 6. Entsprechendes gilt auch für die Wellenstruktur 6 des anderen Plattenkörpers 4.

Gemäß Fig. 2 können Längsenden 17 der einzelnen Wellen 8 zum Rand 14 hin auslaufen.

Wie sich den Figuren 4a bis 4d entnehmen lässt, können die einzelnen Wellen 8 bzw. können die Wellenstrukturen 5,6 geometrisch unterschiedliche Querschnitte besitzen. So zeigt Fig. 4a eine sinusförmige Wellenstruktur. Fig. 4b zeigt eine kreisbogenförmige Wellenstruktur. Fig. 4c zeigt eine dreieckförmige Wellenstruktur und Fig. 4d zeigt eine trapezförmige Wellenstruktur. Es ist klar, dass grundsätzlich auch andere Querschnitte bzw. Geometrien für die jeweilige Wellenstruktur 5,6 realisierbar sind.

Die Plattenkörper 3,4 sind zweckmäßig aus einem Metall hergestellt. Insbesondere handelt es sich dabei um Blechkörper.

Der Speicherraum 7 des Latentwärmespeichers 1 enthält ein Wärmespeichermaterial 18, bei dem es sich bevorzugt um ein Phasenwechselmaterial, z. B. ein Salz oder eine Salzmischung, handelt.

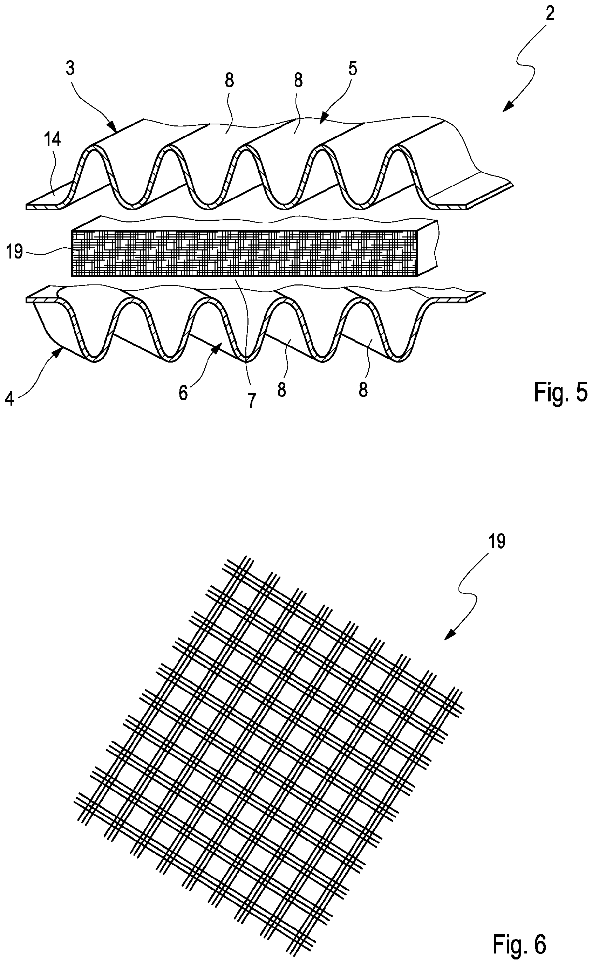

Entsprechend den Figuren 5 und 6 kann im Speicherraum 7 eine Kapillarstruktur 19 angeordnet sein. Die Kapillarstruktur 19 erstreckt sich entlang mehrerer Wellen 8 der beiden Wellenstrukturen 5,6, die den Speicherraum 7 begrenzen. Zweckmäßig ist die Kapillarstruktur 19 so dimensioniert, dass sie sich durch den gesamten Speicherraum 7 und somit im Wesentlichen über alle Wellen 8 der beiden Wellenstrukturen 5,6 innerhalb des Speicherraums 7 erstreckt. Die Befestigung der beiden Plattenkörper 3, 4 aneinander in den Kontaktstellen 13 kann durch die Kapillarstruktur 19 hindurch erfolgen. Alternativ kann die Kapillarstruktur 19 unter Aussparung der Kontaktstellen 13 im Speicherraum 7 verlegt sein. Beispielsweise kann die Kapillarstruktur 19 im Bereich der jeweiligen Kontaktstelle 13 einen offenen Bereich, z. B. eine Masche, aufweisen. Die Kapillarstruktur 19 kann bspw. eine Fasermatte oder eine Vliesmatte oder eine Netzstruktur oder eine Schaumstruktur sein. Die Kapillarstruktur 19 kann metallisch oder keramisch sein. Die Kapillarstruktur 19 ist dabei so ausgelegt bzw. ausgestaltet, dass sie beim flüssigen Wärmespeichermaterial Kapillarwirkung zeigt. Die Kapillarstruktur 19 bewirkt somit, dass sich das flüssige Wärmespeichermaterial 18 im Wesentlichen im gesamten Speicherraum 7 verteilt, unabhängig von der Raumlage der Speicherplatte 2. Hierdurch entstehen beim Verfestigen der Flüssigphase im gesamten Speicherraum 7 Lücken bzw. Freiräume durch das sich zusammenziehende Wärmespeichermaterial 18. Dies ist von erheblicher Bedeutung, da hierdurch sichergestellt ist, dass sich das Wärmespeichermaterial 18 beim Verflüssigen wieder in die bereitstehenden Lücken ausdehnen kann, ohne dass es hierbei zu übermäßigen Verspannungen innerhalb der Speicherplatte 2 kommt.

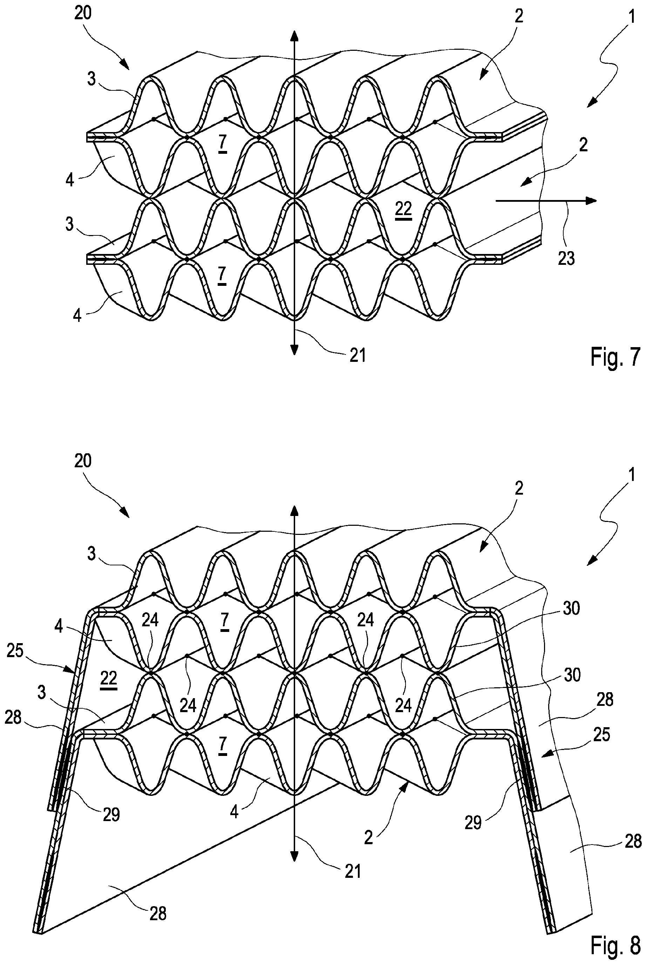

Gemäß den Figuren 7 und 8 umfasst der Latentwärmespeicher 1 zweckmäßig mehrere Speicherplatten 2. Im Beispiel der Figuren 7 und 8 sind jeweils rein exemplarisch zwei derartige Speicherplatten 2 dargestellt. Es ist klar, dass auch mehr als zwei Speicherplatten 2 vorgesehen sein können. Die Speicherplatten 2 sind aufeinander angeordnet, sodass sie einen Plattenstapel 20 bilden, dessen Stapelrichtung 21 senkrecht zur Plattenebene der einzelnen ebenen Speicherplatten 2 verläuft. Zwischen benachbarten Speicherplatten 2 ist ein Strömungspfad 22 ausgebildet, durch den ein Fluidstrom geleitet werden kann. Vorzugsweise handelt es sich beim Fluidstrom um einen Gasstrom, insbesondere um einen Abgasstrom. Grundsätzlich sind jedoch auch Flüssigkeitsströme denkbar.

Die Wellenstrukturen 5,6 der Plattenkörper 3,4, die den jeweiligen Strömungspfad 22 seitlich begrenzen und dementsprechend zu benachbarten Speicherplatten 2 gehören, können geneigt zueinander verlaufen. Auf diese Weise kann auch für den Strömungspfad 22 eine zerklüftete Struktur realisiert werden. Insbesondere bei der Verwendung baugleicher Speicherplatten 2 kann die geometrische Struktur des jeweiligen Speicherraums 7 im Wesentlichen gleich sein wie die geometrische Struktur des Strömungspfads 22, jedoch mit dem Unterschied, dass der jeweilige Speicherraum 7 zwangsläufig nach außen abgeschlossen sein muss, um das Wärmespeichermaterial einzuschließen, während der Strömungspfad 22 zumindest in einer Durchströmungsrichtung offen sein muss. In Fig. 7 ist rein exemplarisch eine Hauptdurchströmungsrichtung 23 oder Längsrichtung 23 des Strömungspfads 22 angedeutet, die zweckmäßig parallel zu den Längsrichtungen 11 der Plattenkörper 3,4 der Speicherplatten 2 verläuft.

Gemäß Fig. 8 besitzen die Plattenkörper 3,4 der benachbarten Speicherplatten 2 innerhalb des Strömungspfads 22 mehrere Kontaktstellen 24, in denen die Plattenkörper 3,4 bzw. die Speicherplatten 2 aneinander anliegen. Dabei kann auch hier vorgesehen sein, dass die aneinander anliegenden Speicherplatten 2 in einigen oder in allen diesen Kontaktstellen 24 aneinander befestigt sind. Die Kontaktstellen 24 können dann Lötstellen oder Schweißstellen sein.

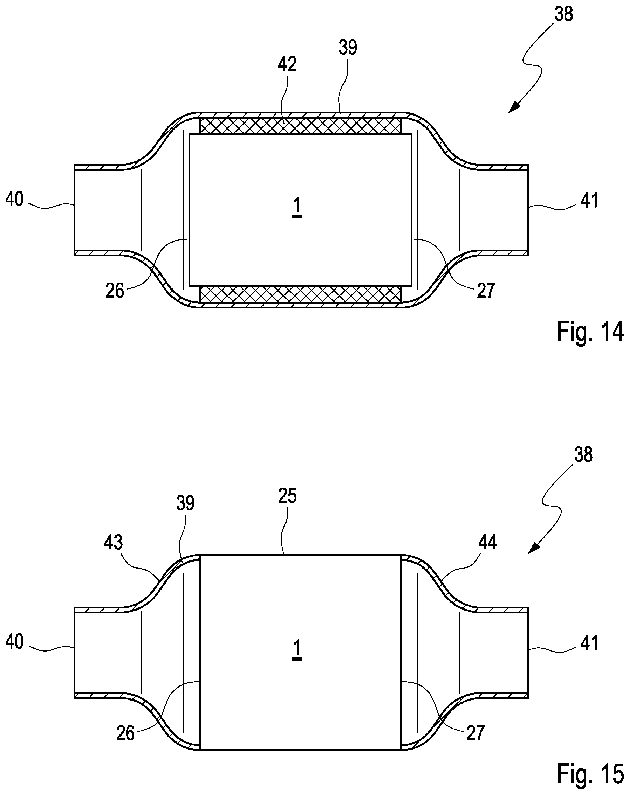

Gemäß Fig. 8 kann der jeweilige Strömungspfad 22 seitlich durch Seitenwände 25 begrenzt sein, die sich von einem offenen Einlass 26 (Fig. 14 und 15) des Strömungspfads 22 bis zu einem offenen Auslass 27 (Fig. 14 und 15) des Strömungspfads 22 entlang des Plattenstapels 20 erstrecken. Fig. 8 zeigt dabei eine besondere Ausführungsform, bei welcher die Seitenwände 25 durch abgewinkelte und einander überlappende Seitenränder 28 der Speicherplatten 2 gebildet sind. Entsprechende Kontaktbereiche sind dabei mit 29 bezeichnet. In diesen Kontaktbereichen 29 kann eine flächige Kontaktierung erfolgen. Gleichzeitig kann in diesen Kontaktbereichen 29 eine gasdichte Verbindung, bspw. als Lötverbindung oder als Schweißverbindung hergestellt werden.

Gemäß einer besonders zweckmäßigen Ausführungsform kann zumindest einer der Plattenkörper 3,4 an einer vom Speicherraum 7 abgewandten Oberfläche, die im Plattenstapel 20 dem Strömungspfad 22 zugewandt ist, eine katalytisch aktive Beschichtung 30 aufweisen. Hierdurch erhält der Latentwärmespeicher 1 eine Zusatzfunktion, da er quasi als Katalysatorelement wirken kann.

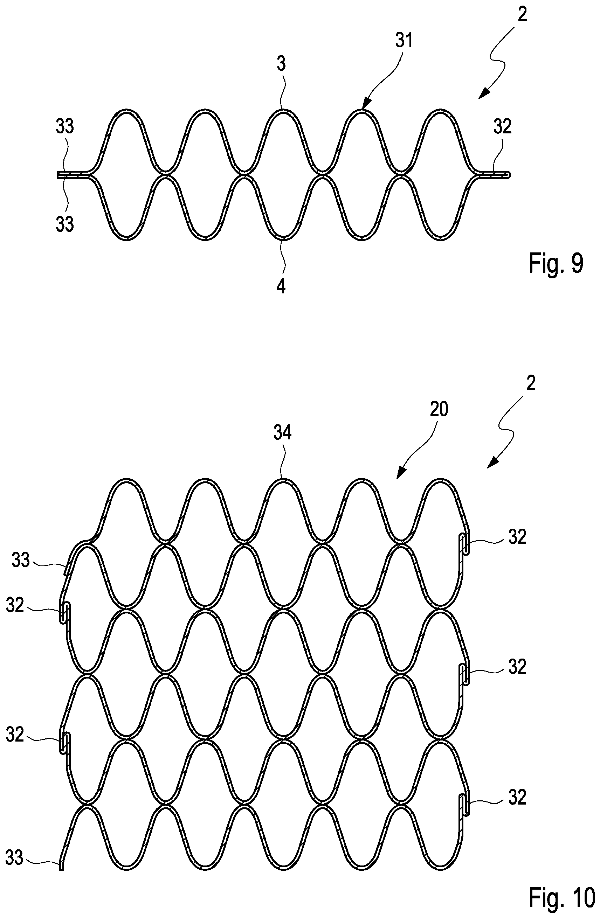

Fig. 9 zeigt eine Ausführungsform einer Speicherplatte 2, bei welcher die beiden Plattenkörper 3,4 durch eine einstückige, zusammenhängende Platte 31 gebildet sind, die im Bereich eines Falzes 32 um 180° gefaltet ist, sodass Bereiche der Platte 31, welche die beiden Plattenkörper 3,4 bilden, aufeinander liegen. Ein entsprechender Falz ist dabei mit 32 bezeichnet, während Längsenden der Platten 31 mit 33 bezeichnet sind. Alternativ dazu können die Plattenkörper 3,4 auch separat hergestellte Bauteile sein, die aufeinander gebaut werden, um die jeweilige Speicherplatte 2 zu bilden. Zweckmäßig werden dann Gleichteile verwendet, sodass die beiden Plattenkörper 3,4 Gleichteile sind.

Fig. 10 zeigt eine Ausführungsform, bei welcher ein Plattenstapel 20 mit Hilfe eines mehrfach gefalteten, zusammenhängenden, einstückigen Bahnenmaterials 34 hergestellt ist. Entsprechende Falze sind wieder mit 32 bezeichnet. Die Längsenden des Bahnenmaterials 34 sind wieder mit 33 bezeichnet. Alternativ dazu wird der Plattenstapel 20 zweckmäßig so hergestellt, dass zunächst die einzelnen Speicherplatten 2 hergestellt werden, die anschließend aufeinander gestapelt werden.

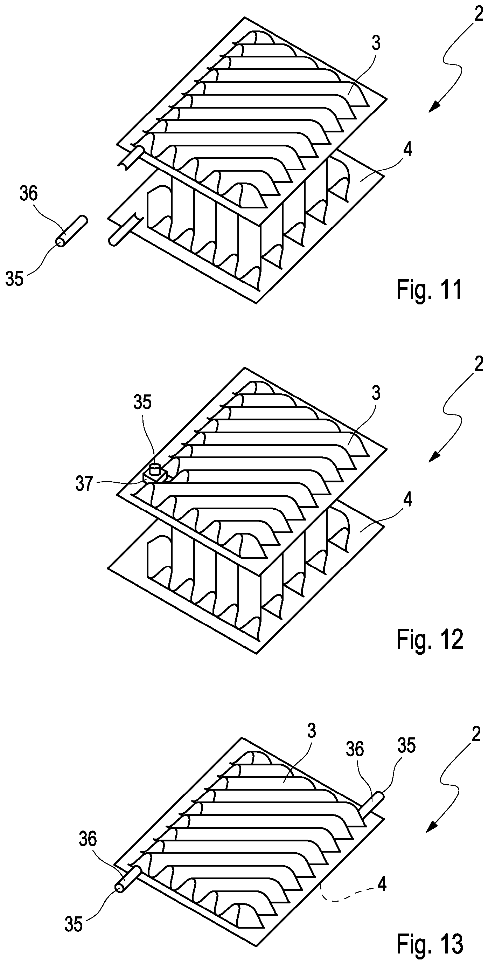

Gemäß den Figuren 11 bis 13 kann die jeweilige Speicherplatte 2 mit wenigstens einer Befüllungsöffnung 35 ausgestattet sein, durch die nach dem Zusammenbau der Plattenkörper 3,4 das Wärmespeichermaterial 18 in den Speicherraum 7 eingefüllt werden kann. Da innerhalb der Speicherplatte 2 ein durchgehender, gemeinsamer Speicherraum 7 vorhanden ist, reicht eine einzige Befüllungsöffnung 35 aus, um den Speicherraum 7 zu befüllen. In den Figuren 11 und 12 wird nur eine einzige Befüllungsöffnung 35 verwendet, durch die bspw. das Wärmespeichermaterial 18 im Festzustand, in Form eines rieseiförmigen Granulats oder Pulvers eingefüllt wird. Fig. 11 zeigt eine Ausführungsform, bei welcher zur Realisierung der Befüllungsöffnung 35 ein Rohrstück 36 verwendet wird. Fig. 12 zeigt eine Ausführungsform, bei welcher die Befüllungsöffnung 35 durch eine entsprechende Ausprägung 37 integral an wenigstens einem der Plattenkörper 3,4 ausgeformt ist.

Fig. 13 zeigt eine Ausführungsform, bei der zwei Befüllungsöffnungen 35 vorgesehen sind, die jeweils mit einem Rohrstück 36 hergestellt sind, von denen das eine zum Einfüllen verwendet werden kann, während das andere zum Entlüften verwendet werden kann. Hierdurch ist es bspw. möglich, den Speicherraum mit flüssigem Wärmespeichermaterial 18 zu befüllen.

Entsprechend den Figuren 14 und 15 umfasst ein Katalysator 38, der sich für einen Einbau in eine Abgasanlage einer Brennkraftmaschine, insbesondere eines Kraftfahrzeugs, eignet, ein Gehäuse 39, das einen Abgaseinlass 40 und einen Abgasauslass 41 aufweist. Im Gehäuse 39 ist nun ein Latentwärmespeicher 1 der vorstehend beschriebenen Art angeordnet. Dabei kann der Latentwärmespeicher 1 wie in Fig. 14 angedeutet, mit Hilfe eines Lagermaterials 42 in das Gehäuse 39 eingebaut sein. Im Unterschied dazu zeigt Fig. 15 eine Ausführungsform, bei welcher zumindest ein Teil des Gehäuses 39 durch die Seitenwände 25 des Latentwärmespeichers 1 gebildet ist. Insbesondere kann der Katalysator 38 gemäß Fig. 15 dadurch realisiert werden, dass ein den Abgaseinlass 40 aufweisender Einlasstrichter 43 und ein den Abgasauslass 41 aufweisender Auslasstrichter 44 stirnseitig an den Latentwärmespeicher 1 angebaut werden, sodass die Außenhaut bzw. der Mantel des Latentwärmespeichers 1 zusammen mit den beiden Trichtern 43,44 dann das Gehäuse 39 des Katalysators 38 bilden.

Bei den hier gezeigten Ausführungsformen des Katalysators 38 wird ein Latentwärmespeicher 1 verwendet, der mit Hilfe einer katalytisch aktiven Beschichtung 30 im Bereich des jeweiligen Strömungspfads 22 als Katalysatorelement verwendet werden kann. Es ist klar, dass bei einer anderen Ausführungsform auch ein Aufbau realisierbar ist, welcher stromauf und/oder stromab des Latentwärmespeichers 1 im Gehäuse 39 zumindest ein konventionelles Katalysatorelement angeordnet sein kann.

## Patentansprüche

1. Latentwärmespeicher für eine Abgasanlage einer Brennkraftmaschine, insbesondere eines Kraftfahrzeugs,
- mit wenigstens einer Speicherplatte (2), die zwei aufeinanderliegende, einen mit Wärmespeichermaterial (18) befüllten Speicherraum (7) einschließende, jeweils eine Wellenstruktur (5, 6) aufweisende Plattenkörper (3, 4) aufweist,
- wobei die Wellenstruktur (5) des einen Plattenkörpers (3) gegenüber der Wellenstruktur (6) des anderen Plattenkörpers (4) geneigt verläuft,
- wobei zumindest zwei Speicherplatten (2) vorgesehen sind, die zur Ausbildung eines Plattenstapels (20) aufeinander angeordnet sind,
- wobei zwischen benachbarten Speicherplatten (2) ein Strömungspfad (22) ausgebildet ist,
- wobei der jeweilige Strömungspfad (22) seitlich durch Seitenwände (25) begrenzt ist, die sich entlang des Plattenstapels (20) erstrecken,
wobei die Seitenwände (25) jeweils von einem offenen Einlass (26) des Strömungspfads (22) bis zu einem offenen Auslass (27) des Strömungspfads (22) sich erstrecken, **dadurch gekennzeichnet, dass** sich Einlass und Auslass in einer Längsachse gegenüberliegen, dass sich die Seitenwände parallel zur Längsachse erstrecken und sich quer zur Längsachse gegenüberliegen,
und dass die Seitenwände durch abgewinkelte und einander überlappende Seitenränder der Speicherplatten gebildet sind.

2. Latentwärmespeicher nach Anspruch 1,
**dadurch gekennzeichnet,**
**dass** die beiden Plattenkörper (3, 4) der jeweiligen Speicherplatte (2) durch eine einstückige, zusammenhängende Platte (31) gebildet sind, die im Bereich eines Falzes (32) um 180° gefaltet ist, so dass die beiden Plattenkörper (3, 4) durch aufeinander liegende Bereiche der Platte (31) gebildet sind.

3. Latentwärmespeicher nach einem der vorhergehenden Ansprüche,
**dadurch gekennzeichnet,**
**dass** der Plattenstapel (20) durch ein mehrfach gefaltetes, zusammenhängendes, einstückiges Bahnenmaterial (34) gebildet ist.

4. Latentwärmespeicher nach einem der vorhergehenden Ansprüche,
**dadurch gekennzeichnet,**
**dass** die Plattenkörper (3, 4) innerhalb des Speicherraums (7) mehrere Kontaktstellen (13) aufweisen, in denen sie aneinander anliegen, wobei die Plattenkörper (3, 4) in mehreren oder in allen Kontaktstellen (13) aneinander befestigt sind.

5. Latentwärmespeicher nach einem der vorhergehenden Ansprüche,
**dadurch gekennzeichnet,**
**dass** die Wellenstrukturen (5, 6) der den jeweiligen Strömungspfad (22) seitlich begrenzenden Plattenkörper (3, 4) der benachbarten Speicherplatten (2) zueinander geneigt verlaufen.

6. Latentwärmespeicher nach einem der Ansprüche 1 bis 5,
**dadurch gekennzeichnet,**
**dass** die jeweilige Speicherplatte (2) einen geschlossen umlaufenden Rand (14) aufweist, in dem die Plattenkörper (3, 4) flächig aneinander anliegen und aneinander befestigt sind.

7. Latentwärmespeicher nach Anspruch 6,
**dadurch gekennzeichnet,**
**dass** die Seitenwände (25) durch Abschnitte des Rands (14) gebildet sind, in denen die Plattenkörper (3, 4) flächig aneinander anliegen und aneinander befestigt sind.

8. Latentwärmespeicher nach einem der Ansprüche 1 bis 7,
**dadurch gekennzeichnet,**
**dass** zumindest einer der Plattenkörper (3, 4) an einer vom Speicherraum (7) abgewandten Oberfläche eine katalytisch aktive Beschichtung (30) aufweist

9. Latentwärmespeicher nach einem der Ansprüche 1 bis 8,
**dadurch gekennzeichnet,**
**dass** im Speicherraum (7) der jeweiligen Speicherplatte (2) eine Kapillarstruktur (19) angeordnet ist, die sich entlang mehrerer oder aller Wellen (8) der Wellenstrukturen (5, 6) der beiden Plattenkörper (3, 4) erstreckt.

10. Katalysator für eine Abgasanlage einer Brennkraftmaschine, insbesondere eines Kraftfahrzeugs,
- mit einem Gehäuse (39), das einen Abgaseinlass (40) und einen Abgasauslass (41) aufweist,
- mit einem im Gehäuse (39) angeordneten Latentwärmespeicher (1) nach einem der Ansprüche 1 bis 9.

## Claims

1. A latent heat storage unit for an exhaust system of a combustion engine, in particular of a motor vehicle,
- with at least one storage plate (2) having two plate bodies (3, 4) lying on top of one another, enclosing a storage space (7) filled with heat storage material (18), each comprising a wave structure (5, 6),
- wherein the wave structure (5) of the one plate body (3) runs inclined relative to the wave structure (6) of the other plate body (4),
- wherein at least two storage plates (2) are provided, which for forming a plate stack (20) are arranged on top of each other,
- wherein between adjacent storage plates (2) a flow path (22) is formed,
- wherein the respective flow path (22) is laterally delimited through side walls (25), which extend along the plate stack (20),
- wherein the side walls (25) each extend from an open inlet (26) of the flow path (22) as far as to an open outlet (27) of the flow path (22),
**characterized in**
- **that** inlet and outlet are opposing each other in a longitudinal axis,
- **that** the side walls extend parallel to the longitudinal axis and are opposing each other transversly to the longitudinal axis, and
- **that** the side walls (25) are formed through angled-off lateral rims (28) of the storage plates (2) overlapping one another.

2. The latent heat storage unit according to Claim 1,
**characterized in that** the two plate bodies (3, 4) of the respective storage plate (2) are formed by means of a single-piece, continuous plate (31) which is folded in the area of a seam (32) about 180° such that the two plate bodies (3, 4) are formed by on top of each other lying areas of the plate (31).

3. The latent heat storage unit according to any one of the preceding claims, **characterized in that** the plate stack (20) is formed a multiple folded continuous single-piece sheet material (34).

4. The latent heat storage unit according to any one of the preceding Claims, **characterized in that** the plate bodies (3, 4) comprise a plurality of contact points (13) within the storage space (7), in which they contact each other, wherein the plate bodies (3, 4) are fastened to each other in a plurality of or in all contact points (13).

5. The latent heat storage unit according to any one of the preceding Claims, **characterized in that** the wave structures (5, 6) of the plate bodies (3, 4) of the adjacent storage plates (2) laterally delimiting the respective flow path (22) run inclined relative to each other.

6. The latent heat storage unit according to any one of the Claims 1 to 5, **characterized in that** the respective storage plate (2) has a closed circumferential rim (14), in which the plate bodies (3, 4) areally contact each other and are fastened to each other.

7. The latent heat storage unit according to Claim 6, **characterized in that** the side walls (25) are formed by areas of the rim (14), in said areas the plate bodies (3, 4) planarly rest on each other and are fixed to each other.

8. The latent heat storage unit according to any one of the Claims 1 to 7, **characterized in that** at least one of the plate bodies (3, 4) has a catalytically active coating (30) on a surface facing away from the storage space (7).

9. The latent heat storage unit according to any one of the Claims 1 to 8, **characterized in that** in the storage space (7) of the respective storage plate (2) a capillary structure (19) is arranged, which extends along a plurality of or all waves (8) of the wave structures (5, 6) of the two plate bodies (3, 4).

10. A catalytic converter for an exhaust system of a combustion engine, in particular of a motor vehicle,
- with a housing (39) having an exhaust gas inlet (40) and an exhaust gas outlet (41),
- having a latent heat storage unit (1) according to any one of the claims 1 to 9 arranged in the housing (39).

## Revendications

1. Accumulateur de chaleur latente pour un système de gaz d'échappement d'un moteur à combustion interne, en particulier d'un véhicule automobile,
- avec au moins une plaque d'accumulation (2), qui comporte deux corps de plaque (3, 4) superposés, enfermant un espace d'accumulation (7) rempli d'un matériau accumulateur de chaleur (18) et présentant chacun une structure ondulée (5, 6),
- dans lequel la structure ondulée (5) d'un corps de plaque (3) est inclinée par rapport à la structure ondulée (6) de l'autre corps de plaque (4),
- dans lequel il est prévu au moins deux plaques d'accumulation (2) qui sont agencées l'une sur l'autre pour former une pile de plaques (20),
- dans lequel un chemin d'écoulement (22) est réalisé entre des plaques d'accumulation (2) voisines,
- dans lequel le chemin d'écoulement (22) respectif est délimité latéralement par des parois latérales (25) qui s'étendent le long de la pile de plaques (20),
- dans lequel les parois latérales (25) s'étendent chacune d'une entrée ouverte (26) du chemin d'écoulement (22) à une sortie ouverte (27) du chemin d'écoulement (22),
**caractérisé en ce que** l'entrée et la sortie sont à l'opposé l'une de l'autre dans un axe longitudinal, **en ce que** les parois latérales s'étendent parallèlement à l'axe longitudinal et sont à l'opposé l'une de l'autre transversalement à l'axe longitudinal et **en ce que** les parois latérales sont formées par des bords latéraux, coudés et se chevauchant, des plaques d'accumulation.

2. Accumulateur de chaleur latente selon la revendication 1, **caractérisé en ce que** les deux corps de plaque (3, 4) de la plaque d'accumulation (2) respective sont formés par une plaque (31) qui est d'un seul tenant et continue et qui est pliée à 180° dans la zone d'un pli (32) de telle sorte que les deux corps de plaque (3, 4) sont formés par des zones superposées de la plaque (31).

3. Accumulateur de chaleur latente selon l'une des revendications précédentes, **caractérisé en ce que** la pile de plaques (20) est formée par un matériau en bande (34) d'un seul tenant et continu qui est plié plusieurs fois.

4. Accumulateur de chaleur latente selon l'une des revendications précédentes, **caractérisé en ce que** les corps de plaque (3, 4) comportent à l'intérieur de l'espace d'accumulation (7) plusieurs points de contact (13) au niveau desquels ils se touchent, les corps de plaque (3, 4) étant fixés l'un à l'autre au niveau de plusieurs points de contact ou de tous les points de contact (13).

5. Accumulateur de chaleur latente selon l'une des revendications précédentes, **caractérisé en ce que** les structures ondulées (5, 6) des corps de plaque (3, 4), délimitant latéralement le chemin d'écoulement (22) respectif, des plaques d'accumulation (2) voisines sont inclinées l'une par rapport à l'autre.

6. Accumulateur de chaleur latente selon l'une des revendications 1 à 5, **caractérisé en ce que** la plaque d'accumulation (2) respective comporte un bord périphérique fermé (14) dans lequel les corps de plaque (3, 4) se touchent par leur surface et sont fixés l'un à l'autre.

7. Accumulateur de chaleur latente selon la revendication 6, **caractérisé en ce que** les parois latérales (25) sont formées par des tronçons du bord (14) dans lesquels les corps de plaque (3, 4) se touchent par leur surface et sont fixés l'un à l'autre.

8. Accumulateur de chaleur latente selon l'une des revendications 1 à 7, **caractérisé en ce qu'**au moins l'un des corps de plaque (3, 4) comporte au niveau d'une surface éloignée de l'espace d'accumulation (7) un revêtement (30) qui est actif d'un point de vue catalytique.

9. Accumulateur de chaleur latente selon l'une des revendications 1 à 8, **caractérisé en ce que**, dans l'espace d'accumulation (7) de la plaque d'accumulation (2) respective, est agencée une structure capillaire (19) qui s'étend le long de plusieurs ou de toutes les ondulations (8) des structures ondulées (5, 6) des deux corps de plaque (3, 4).

10. Convertisseur catalytique pour un système de gaz d'échappement d'un moteur à combustion interne, en particulier d'un véhicule automobile,
- avec une enceinte (39) qui comporte une entrée de gaz d'échappement (40) et une sortie de gaz d'échappement (41),
- avec un accumulateur de chaleur latente (1) selon l'une des revendications 1 à 9 agencé dans l'enceinte (39).
